# NOUVEAU FASCICULE DE BREVET EUROPEEN

(11) **EP 2 168 795 B2**
(45) Date de publication et mention de la décision concernant l'opposition: **18.04.2018**
(45) Mention de la délivrance du brevet: 07.11.2012
(21) Numéro de dépôt: 09170228.2
(22) Date de dépôt: 14.09.2009
(51) Int. Cl.: B60H 1/32

(54) **Installation de chauffage, ventilation et/ou climatisation munie d'un dispositif d'évacuation de condensats**
Heizungs-Lüftungs und/oder Klimaanlage mit Kondensatablauf
Heating, ventilating and/or air conditioning installation with a condensate draining device

(30) Priorité: 24.09.2008 FR 0805241
(43) Date de publication de la demande: 31.03.2010
(73) Titulaire: Valeo Systèmes Thermiques, 78321 Le Mesnil Saint Denis (FR)
(72) Inventeur: Queinnec, Jean-Yves, 78990 Elancourt (FR)

(56) Documents cités:
- EP-A2- 1 122 103
- DE-A1- 3 228 440
- DE-A1- 3 611 009
- DE-A1- 3 623 185
- FR-A- 2 534 194
- FR-A- 2 911 815
- JP-A- H09 263 122

## Description

La présente invention est du domaine des installations de chauffage, ventilation et/ou climatisation, notamment pour un véhicule automobile. Elle a pour objet un dispositif d'évacuation de condensats hors d'une installation de chauffage, ventilation et/ou climatisation d'un véhicule automobile. Elle a aussi pour objet une telle installation équipée d'un tel dispositif. Elle a enfin pour objet une méthode d'obtention d'une telle installation.

Un véhicule automobile est couramment équipé d'une installation de chauffage, ventilation et/ou climatisation pour modifier les paramètres aérothermiques de l'air contenu à l'intérieur de l'habitacle du véhicule. Une telle modification est réalisée par distribution à l'intérieur de l'habitacle d'un flux d'air à température appropriée.

A cette fin, l'installation de chauffage, ventilation et/ou climatisation comporte notamment un évaporateur prévu pour être traversé par le flux d'air, de telle sorte que le flux d'air soit au moins refroidi préalablement à sa distribution à l'intérieur de l'habitacle. Le refroidissement du flux d'air est réalisé à partir d'un échange thermique entre des tubes de circulation d'un fluide réfrigérant et des intercalaires disposés dans l'évaporateur et le flux d'air. Au cours de l'échange thermique, le flux d'air est également déshumidifié et des gouttes d'eau sont générées sur les tubes ou les intercalaires de l'évaporateur. Il en résulte des condensats qu'il est souhaitable d'évacuer hors de l'installation de chauffage, ventilation et/ou climatisation.

Le document FR 2 534 194 décrit une installation selon la préambule de la revendication 1.

Le document EP 1 795 388 décrit un dispositif d'évacuation des condensats comprenant un bac destiné à être disposé sous l'évaporateur pour récupérer par gravité les condensats. Le bac comporte une paroi inférieure pourvue d'un tuyau d'évacuation des condensats hors du bac, puis hors de l'installation de chauffage, ventilation et/ou climatisation. Le tuyau est mobile entre une position de transport dans laquelle le tuyau est au moins partiellement logé à l'intérieur du bac et une position d'utilisation dans laquelle le tuyau est extrait hors du bac. Pour permettre la manoeuvre du tuyau entre les positions de transport et d'utilisation, le tuyau comporte une zone flexible constituée de nervures et de rainures alternées. Les rainures sont formées à partir d'un amincissement de matière tandis que les nervures sont issues d'un épaississement de matière.

La structure d'un tel dispositif s'avère complexe à réaliser et encombrante. Par ailleurs, les rainures constituent des zones de fragilisation du tuyau au niveau desquelles des fuites de condensats sont susceptibles de survenir.

D'autre part, des nuisances sonores en provenance de l'extérieur du véhicule sont susceptibles de se propager à l'intérieur de l'habitacle, suite à leur remontée à travers le tuyau. Ceci entraine une gêne pour les occupants du véhicule.

Enfin, l'assemblage et la mise en oeuvre de l'installation de chauffage, ventilation et/ou climatisation et l'intégration du dispositif d'évacuation des condensats à l'intérieur de l'installation de chauffage, ventilation et/ou climatisation mérite d'être simplifiés pour offrir une rapidité d'exécution et une fiabilité optimisées.

Il est connu des documents DE3228440 et DE3611009 une installation de chauffage, ventilation et / ou climatisation d'un véhicule automobile comprenant un boîtier et un tuyau d'évacuation des condensats relié au boitier par l'intermédiaire d'un dispositif d'évacuation des condensats. Le dispositif d'évacuation réalisé en matériau élastique comprend une lèvre d'étanchéité de section en U. Ce dispositif est rapporté sur un bord d'une paroi inférieure du boitier.

Le but de la présente invention est de proposer une installation de chauffage, ventilation et/ou climatisation comportant un dispositif d'évacuation de condensats robuste et péren, y compris lors de sa mise en place dans l'installation de chauffage, ventilation et/ou climatisation. Le dispositif d'évacuation de condensats est constitué d'un nombre d'éléments le plus restreint possible, tout en étant fiable.

L'installation de chauffage, ventilation et/ou climatisation de la présente invention comprend un boîtier et un tuyau d'évacuation des condensats relié au boîtier par l'intermédiaire d'un dispositif d'évacuation des condensats comprenant au moins un manchon réalisé en matière souple.

Cette disposition est tel que le manchon présente à la fois une flexibilité et une robustesse optimisées, pour, notamment, permettre une manipulation du manchon, y compris lors de la mise en place du dispositif d'évacuation des condensats dans l'installation de chauffage, ventilation et/ou climatisation.

Selon l'invention, le dispositif d'évacuation des condensats comprenant une paroi de fond reliée au manchon, le dispositif d'évacuation des condensats étant rapporté sur un bord d'un orifice ménagé à travers une paroi inférieure du boîtier, le dispositif d'évacuation des condensats comprend une lèvre périphérique d'étanchéité relié au manchon et en ce que la lèvre d'étanchéité est conformée en U ayant des branches reliées l'une à l'autre par une zone médiane et en ce que la paroi de fond est reliée à la zone médiane par l'intermédiaire d'une première charnière film.

En particulier, selon un mode particulier de réalisation, le boîtier comprend au moins deux coquilles assemblées. Dans cette configuration, l'orifice peut être débouchant sur un premier rebord de l'une des coquilles.

Selon une variante, le manchon est agencé en un dièdre D. Une telle conformation du manchon facilite de par son inclinaison l'évacuation des condensats hors de l'installation de chauffage, ventilation et/ou climatisation.

De plus, en complément ou selon une autre variante, la zone médiane de la lèvre d'étanchéité comporte un joint périphérique.

De façon particulièrement avantageuese, le joint périphérique est interposé entre les deux coquilles assemblées pour former le boîtier

Le joint périphérique comporte, de plus, au moins une zone d'extrémité ménagée en prolongement de la zone médiane et pouvant être interposée entre les deux coquilles assemblées pour former le boîtier.

Une alternative de réalisation prévoit que le dispositif d'évacuation des condensats est pourvu d'une chicane apte empêcher le remontée de nuisances sonores à travers le tuyau d'évacuation. La chicane peut être solidaire du manchon et surplombée le tuyau d'évacuation ou être solidaire de la zone médiane par l'intermédiaire d'une deuxième charnière film. Dans ce dernier cas, la chicane est pourvue d'une butée ménagée à l'opposé de la deuxième charnière film.

Selon les diverses réalisations, le manchon présente une épaisseur constante et est réalisé en styrène-éthylène-butylène-styrène ou en caoutchouc.

La présente invention sera mieux comprise, et des détails en relevant apparaîtront, à la lecture de la description détaillée qui va être faite de variantes de réalisation pris à titre d'exemple nullement limitatifs et illustrés en relation avec les figures des planches annexées, dans lesquelles:
Les figures 1 et 2 sont des illustrations en perspective d'un dispositif d'évacuation des condensats respectivement en position de transport et d'utilisation,
La figure 3 est une vue en perspective éclatée du dispositif illustrée en figure 2,
Les figures 4 à 6 sont des vues partielles du dispositif illustré sur les figures précédentes respectivement en perspective, en vue de dessus et en vue de côté.
Les figures 7 et 8 sont des illustrations en coupe du dispositif illustrée sur les figures 1 à 3 respectivement en position d'utilisation et en position de transport.

Un véhicule automobile est couramment équipé d'une installation de chauffage, ventilation et/ou climatisation pour modifier les paramètres aérothermiques d'un flux d'air distribué en diverses zones d'un habitacle du véhicule automobile. A cet effet, l'installation de chauffage, ventilation et/ou climatisation comprend des composants reliés à une boucle thermodynamique de climatisation parcourue par un fluide réfrigérant. En particulier, la boucle thermodynamique comporte un évaporateur destiné à refroidir et à déshumidifier le flux d'air préalablement à être distribué dans l'habitacle du véhicule automobile

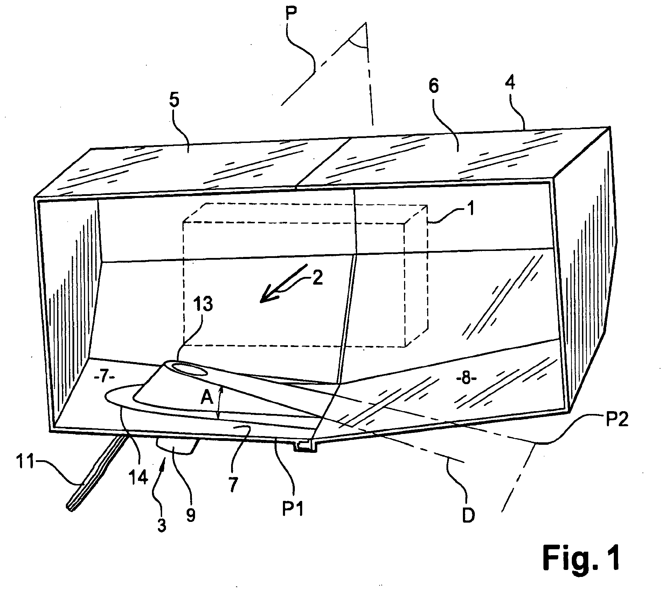

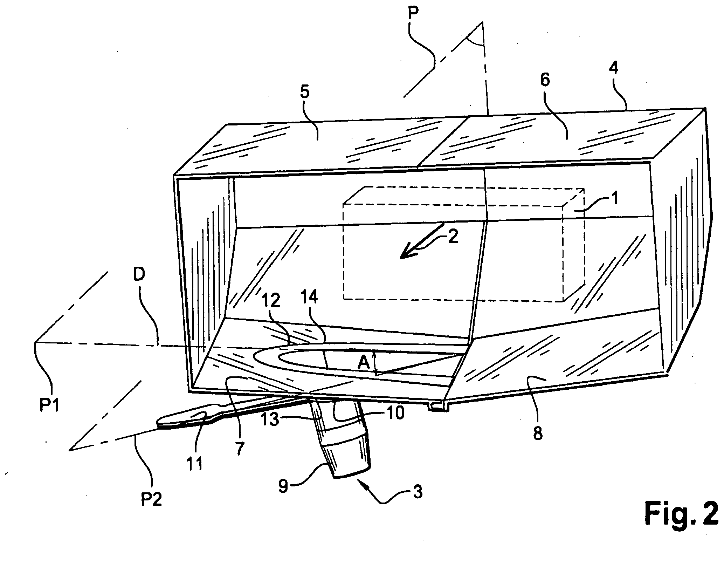

Tel que présenté sur les figures 1 et 2, l'installation de chauffage, ventilation et/ou climatisation comprend un boîtier 4 logeant un évaporateur 1 traversé par un flux d'air 2 en vue de son refroidissement préalablement à sa distribution à l'intérieur de l'habitacle. Au contact de l'évaporateur 1, le flux d'air 2 est déshumidifié. Ce phénomène de déshumidification génère des condensats à la surface de l'évaporateur 1.

Par gravité, les condensats ruissellent le long de l'évaporateur 1 et sont regroupés dans une partie basse du boîtier 4 de l'installation de chauffage, ventilation et/ou climatisation. Pour éviter une accumulation excessive et une propagation des condensats à l'intérieur de l'installation de chauffage, ventilation et/ou climatisation, elle est équipée d'un dispositif d'évacuation des condensats 3 d'évacuation des condensats.

Le dispositif d'évacuation des condensats 3 est intégré au boîtier 4. Le boîtier 4 est notamment obtenu à partir de l'assemblage, notamment par emboîtement ou concept analogue, d'au moins une première coquille 5 et d'une deuxième coquille 6. Selon une forme de réalisation particulière, l'assemblage de la première coquille 5 et de la deuxième coquille 6 est réalisé selon un plan de joint P, qui, selon un exemple de réalisation de la présente invention, est vertical.

Le boîtier 4 comprend des parois internes constituées notamment au moins d'une première et d'une deuxième parois inférieures 7 et 8 disposées respectivement dans les première et deuxième coquilles 5 et 6.

La première paroi inférieure 7 est disposée dans la première coquille 5. La première paroi inférieure 7 comprend le dispositif d'évacuation des condensats 3 comprenant au moins un tuyau d'évacuation 9 des condensats hors de l'installation de chauffage, ventilation et/ou climatisation. Le tuyau d'évacuation 9 est constitué d'un pourtour 12, d'un manchon 10 et d'une paroi de fond 13. Plus particulièrement, le pourtour 12 et est relié à une paroi de fond 13 par l'intermédiaire d'un manchon 10. Par ailleurs, le tuyau d'évacuation 9 est relié à la première paroi inférieure 7 par l'intermédiaire du pourtour 12.

Selon l'exemple de réalisation de la présente invention, le pourtour 12 est inscrit à l'intérieur d'un premier plan P1 tandis que la paroi de fond 13 est inscrit à l'intérieur d'un deuxième plan P2 sécant au premier plan P1. Plus particulièrement, le premier plan P1 et le deuxième plan P2 forment conjointement un dièdre D d'un angle A, compris en particulier entre 5° et 40°.

De façon préférentiellement, les premier et deuxième plans P1 et P2 sont sécants selon un axe constituant également l'axe de rotation du manchon 10 entre une position de transport et une position d'utilisation.

Selon un exemple préférentiel de réalisation, le pourtour 12 et la paroi de fond 13 sont en contact le long de l'axe de rotation du manchon 10.

Le manchon 10 dispose d'une flexibilité, d'une fiabilité et d'une pérennité optimisées. Pour ce faire, il est proposé par la présente invention que le manchon 10 soit réalisé à partir d'une matière souple. Plus particulièrement, la matière souple est un élastomère tel que le styrène-éthylène-butylène-styrène, communément dénommé sous l'acronyme « SEBS », le caoutchouc ou analogue.

Le manchon 10 est manoeuvrable entre la position de transport, illustrée sur la figure 1, dans laquelle le manchon 10 est logé à l'intérieur du boîtier 4, et la position d'utilisation, illustrée sur la figure 2, dans laquelle le manchon 10 est extrait hors du boîtier 4.

La constitution du manchon 10 à partir d'une matière souple présente l'avantage d'éviter son déchirement, notamment lors de la mise en place du tif d'évacuation des condensats 3 dans le boîtier 4, et/ou lors de la mise en position d'utilisation du tuyau d'évacuation 9, tout en limitant les efforts nécessaires pour déplacer le manchon 9 de ces deux positions. De plus, la matière souple autorise également un ajustement amélioré du dispositif d'évacuation des condensats avec une ouverture pratiquée dans le plancher de l'habitacle afin de permettre l'évacuation des condensats à l'extérieur du véhicule.

Pour éviter une fragilisation du manchon 10 lors de sa manipulation entre les positions de transport et d'utilisation, le manchon 10 présente une épaisseur constante, notamment comprise entre 1 mm et 5 mm.

La manoeuvre du manchon 10 entre les positions de transport et d'utilisation est réalisée à partir d'une traction, d'une poussée ou d'une rotation effectuée par un opérateur sur une poignée 11 solidaire du manchon 10.

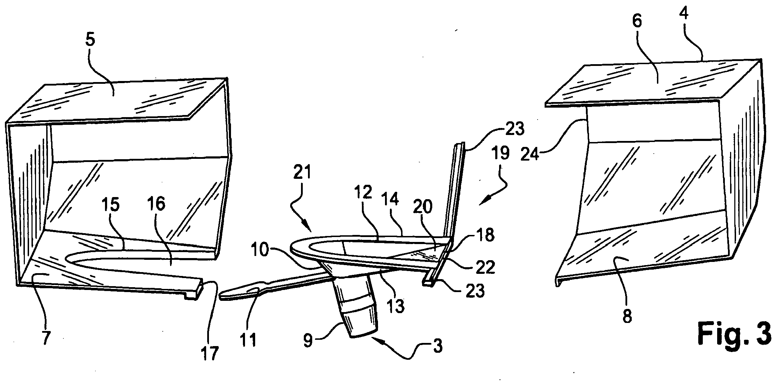

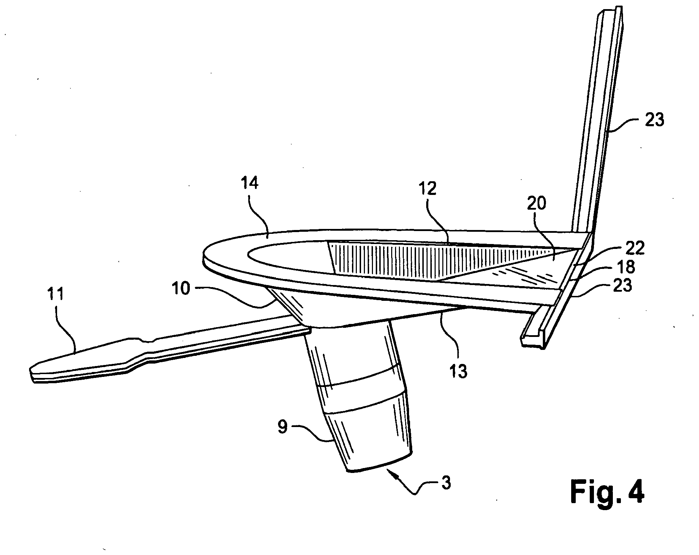

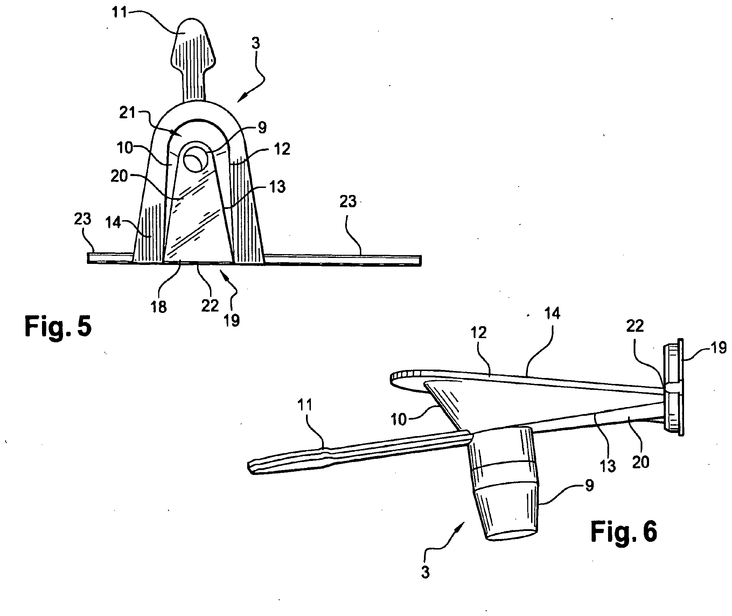

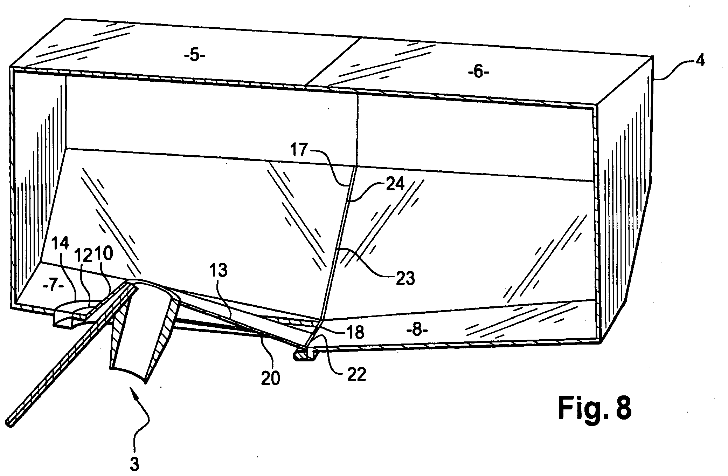

En se reportant également aux figures 3 à 8, le premier pourtour 12 du manchon 10 est équipé d'une lèvre périphérique d'étanchéité 14. La lèvre périphérique d'étanchéité 14 est rapportée sur un bord 15 d'un orifice de réception 16, visibles sur la figure 3, ménagé à travers la paroi inférieure 7 du boîtier 4.

Plus particulièrement, l'orifice de réception 16 est ménagé à travers la première paroi inférieure 7. La lèvre périphérique d'étanchéité 14 est inscrite à l'intérieur du premier plan P1. L'orifice de réception 16 est préférentiellement débouchant sur un premier rebord 17 de la première paroi inférieure 7, de telle sorte que l'orifice de réception 16 constitue une encoche de réception de la lèvre périphérique d'étanchéité 14.

De façon préférentielle, le premier rebord 17 est contenu dans le plan de joint P de l'installation de chauffage, ventilation et/ou climatisation.

La lèvre périphérique d'étanchéité 14 est agencée en U afin de coopérer par complémentarité de forme avec le premier rebord 17 de l'orifice de réception 16. Les branches du U de la lèvre périphérique d'étanchéité 14 comportent des extrémités reliées entre elles par une zone médiane 18.

De façon préférentielle, la zone médiane 18 constitue un joint périphérique 19 permettant l'assemblage étanche entre la première coquille 5 et la deuxième coquille 6.

La paroi de fond 13 du manchon 10 est équipée du tuyau d'évacuation 9. La paroi de fond 13 est ménagée à l'intérieur du deuxième plan P2 du dièdre D. Ainsi en position d'utilisation, le manchon 10 et la paroi de fond 13 forment conjointement une cuvette de réception des condensats qui ont la faculté de s'écouler hors de l'installation de chauffage, ventilation et/ou climatisation par l'intermédiaire du tuyau d'évacuation 9, notamment en dehors de l'habitacle et vers l'extérieur du véhicule.

La conformation en dièdre D du manchon 10 et un positionnement du tuyau d'évacuation 9 en une zone évasée 21 du dièdre D facilite l'évacuation par gravité des condensats hors de l'installation de chauffage, ventilation et/ou climatisation.

Pour faciliter la manoeuvre du manchon 10 entre ses positions de transport et d'utilisation, la paroi de fond 13 est reliée à la zone médiane 18 du joint périphérique 19. Selon l'invention, la liaison entre la zone médiane 18 et le joint périphérique 19 se fait par l'intermédiaire d'une première charnière film 22.

Le joint périphérique 19 comporte deux zones d'extrémité 23 ménagées en prolongement de la zone médiane 18. Les zones d'extrémité 23 sont destinées à être disposées entre le premier rebord 17 de la première paroi inférieure 7 et un deuxième rebord 24 de la deuxième paroi inférieure 8, pour assurer une étanchéité optimisée du boîtier 4 au regard des condensats.

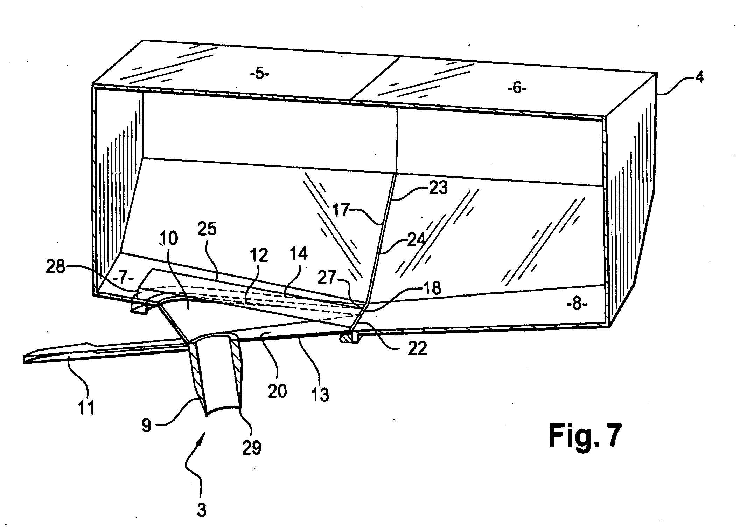

Sur la figure 7, le dispositif d'évacuation des condensats 3 comprend une chicane 25 pour empêcher l'admission d'ondes sonores à l'intérieur du boîtier 4 par l'intermédiaire du tuyau d'évacuation 9 en communication avec l'extérieur du véhicule.

Selon une première variante de réalisation, la chicane 25 est solidaire du manchon 10 et surplombe le tuyau d'évacuation 9. Plus particulièrement, le manchon 10 et la chicane 25 forment un ensemble continu et monobloc.

Selon une deuxième variante de réalisation non représentée, la chicane 25 est solidaire de la zone médiane 18 par l'intermédiaire d'une deuxième charnière film 27. Ces dispositions sont telles que la chicane 25 est manoeuvrable entre une première position dans laquelle la chicane 25 repose contre la deuxième paroi inférieure 8 de la deuxième coquille 6, et une deuxième position dans laquelle la chicane 25 repose contre la première paroi inférieure 7 de la première coquille 5. La chicane 25 est équipée, à cet effet, d'une butée 28 ménagée à l'opposé de la deuxième charnière-film 27.

Pour assurer le maintien de la chicane 25 dans la deuxième position, la chicane 25 est pourvue d'un doigt d'accroche sur le tuyau d'évacuation 9 ou sur la première paroi inférieure 7.

Il résulte de ces dispositions que les condensats sont à même de s'écouler entre la chicane 25 et la première paroi inférieure 7 par des espaces prévus à cet effet tout en permettant que la chicane 25 assure une fonction d'écran acoustique vis-à-vis d'ondes sonores remontant à travers le tuyau d'évacuation 9.

Un tel dispositif d'évacuation des condensats 3 est obtenu à partir d'une méthode comportant une première étape qui consiste à ménager l'orifice 16 à travers la première coquille 5 formant une partie du boîtier 4. Plus précisément, la première étape consiste à ménager l'orifice 16 à travers la première paroi inférieure élémentaire 7 de la première coquille 5, cet orifice 16 étant débouchant sur le premier rebord 17 de la première coquille 5.

Selon une première variante de réalisation, la lèvre périphérique 14, le manchon 10, la paroi de fond 13 et, le joint périphérique 19, et optionnellement, la chicane 25 sont rapportés par surmoulage sur le boîtier 4.

Selon une deuxième variante de réalisation, la lèvre périphérique 14 est rapportée par emboîtement sur le bord 15 de l'orifice 16.

Bien évidemment, l'invention n'est pas limitée aux modes de réalisation décrits précédemment et fournis uniquement à titre d'exemple et englobe d'autres variantes que pourra envisager l'homme du métier dans le cadre des revendications et notamment toutes combinaisons des différents modes de réalisation décrits précédemment.

## Revendications

1. Installation de chauffage, ventilation et/ou climatisation d'un véhicule automobile, comprenant un boîtier (4) et un tuyau d'évacuation (9) des condensats relié au boîtier (4) par l'intermédiaire d'un dispositif d'évacuation des condensats (3), le dispositif d'évacuation des condensats (3) comprenant au moins un manchon (10) réalisé en matière souple, le dispositif d'évacuation des condensats (3) comprenant une paroi de fond (13) reliée au manchon (10), le dispositif d'évacuation des condensats (3) étant rapporté sur un bord (15) d'un orifice (16) ménagé à travers une paroi inférieure (7, 8) du boîtier (4), **caractérisée en ce que** le dispositif d'évacuation des condensats (3) comprend une lèvre périphérique d'étanchéité (14) relié au manchon (10) et **en ce que** la lèvre d'étanchéité (14) est conformée en U ayant des branches reliées l'une à l'autre par une zone médiane (18) et **en ce que** la paroi de fond (13) est reliée à la zone médiane (18) par l'intermédiaire d'une première charnière film (22).

2. Installation selon la revendication 1, **caractérisée en ce que** le boîtier (4) comprend au moins deux coquilles (7, 8) assemblées et **en ce que** l'orifice (16) est débouchant sur un premier rebord (17) de l'une des coquilles (7).

3. Installation selon l'une des revendications 1 ou 2, **caractérisée en ce que** la zone médiane (18) de la lèvre d'étanchéité (14) comporte un joint périphérique (19).

4. Installation selon la revendication 3, **caractérisée en ce que** le joint périphérique (19) comporte au moins une zone d'extrémité (23) ménagée en prolongement de la zone médiane (18).

5. Installation selon l'une des revendications 1 ou 2, **caractérisée en ce que** la zone d'extrémité (23) est interposée entre les deux coquilles (5, 6) assemblées pour former le boîtier (4).

6. Installation selon l'une quelconque des revendications précédentes, **caractérisé en ce que** le dispositif d'évacuation des condensats (3) est pourvu d'une chicane (25) apte empêcher le remontée de nuisances sonores à travers le tuyau d'évacuation (9).

7. Installation selon la revendication 6, **caractérisé en ce que** la chicane (25) est solidaire du manchon (10) et surplombe le tuyau d'évacuation (9).

8. Installation selon la revendication 6, **caractérisé en ce que** la chicane (25) est solidaire de la zone médiane (18) par l'intermédiaire d'une deuxième charnière film (27).

9. Installation selon la revendication 8, **caractérisé en ce que** la chicane (25) est pourvue d'une butée (28) ménagée à l'opposé de la deuxième charnière film (27).

10. Installation selon l'une quelconque des revendications précédentes, **caractérisée en ce que** le manchon (10) présente une épaisseur constante.

11. Installation selon l'une des revendications précédentes, **caractérisée en ce que** le manchon (10) est réalisé en styrène-éthylène-butylène-styrène ou en caoutchouc.

## Patentansprüche

1. Heizungs-, Lüftungs- und/oder Klimaanlage eines Kraftfahrzeugs, die ein Gehäuse (4) und ein Abzugsrohr (9) der Kondensate enthält, das mit dem Gehäuse (4) über eine Kondensatabzugsvorrichtung (3) verbunden ist, wobei die Kondensatabzugsvorrichtung (3) mindestens eine Muffe (10) enthält, die aus biegsamem Material hergestellt ist,
**dadurch gekennzeichnet, dass** die Kondensatabzugsvorrichtung (3) eine mit der Muffe (10) verbundene Bodenwand (13) enthält, und dass die Kondensatabzugsvorrichtung (3) auf einen Rand (15) einer Öffnung (16) aufgesetzt ist, die durch eine untere Wand (7, 8) des Gehäuses (4) ausgespart ist, und dass die Bodenwand (13) mit der mittleren Zone (18) über ein erstes Folienscharnier (22) verbunden ist.

2. Anlage nach Anspruch 1, **dadurch gekennzeichnet, dass** das Gehäuse (4) mindestens zwei zusammengefügte Schalen (7, 8) enthält, und dass die Öffnung (16) auf einer ersten Randleiste (17) einer der Schalen (7) mündet.

3. Anlage nach Anspruch 1 oder 2, **dadurch gekennzeichnet, dass** die mittlere Zone (18) der Dichtlippe (14) eine Umfangsdichtung (19) aufweist.

4. Anlage nach Anspruch 3, **dadurch gekennzeichnet, dass** die Umfangsdichtung (19) mindestens eine Endzone (23) aufweist, die in der Verlängerung der mittleren Zone (18) angeordnet ist.

5. Anlage nach einem der vorhergehenden Ansprüche, **dadurch gekennzeichnet, dass** die Endzone (23) zwischen die zwei zusammengefügten Schalen (5, 6) eingefügt wird, um das Gehäuse (4) zu formen.

6. Anlage nach einem der vorhergehenden Ansprüche, **dadurch gekennzeichnet, dass** die Kondensatabzugsvorrichtung (3) mit einem Prallblech (25) versehen ist, das das Hochsteigen von Lärmbelästigungen durch das Abzugsrohr (9) verhindern kann.

7. Anlage nach Anspruch 6, **dadurch gekennzeichnet, dass** das Prallblech (25) fest mit der Muffe (10) verbunden ist und über dem Abzugsrohr (9) sitzt.

8. Anlage nach Anspruch 6, **dadurch gekennzeichnet, dass** das Prallblech (25) mittels eines zweiten Folienscharniers (27) fest mit der mittleren Zone (18) verbunden ist.

9. Anlage nach Anspruch 8, **dadurch gekennzeichnet, dass** das Prallblech (25) mit einem Anschlag (28) versehen ist, der entgegengesetzt zum zweiten Folienscharnier (27) angeordnet ist.

10. Anlage nach einem der vorhergehenden Ansprüche, **dadurch gekennzeichnet, dass** die Muffe (10) eine konstante Dicke hat.

11. Anlage nach einem der vorhergehenden Ansprüche, **dadurch gekennzeichnet, dass** die Muffe (10) aus Styrol-Ethylen-Butylen-Styrol oder aus Kautschuk hergestellt ist.

## Claims

1. Heating, ventilating and/or air conditioning installation for a motor vehicle, said installation including a casing (4) and a condensate draining pipe (9) connected to the casing (4) by means of a condensate draining device (3), the condensate draining device (3) including at least one sleeve (10) realized in flexible material, the condensate draining device (3) including a bottom wall (13) connected to the sleeve (10), the condensate draining device (3) being placed on an edge (15) of an aperture (16) arranged through a bottom wall (7, 8) of the casing (4), **characterized in that** the condensate draining device (3) includes a peripheral sealing lip (14) connected to the sleeve (10) and **in that** the sealing lip (14) is designed in a U-shaped manner having legs which are connected together by a middle zone (18) and **in that** the bottom wall (13) is connected to the middle zone (18) by means of a first film hinge (22).

2. Installation according to Claim 1, **characterized in that** the casing (4) includes at least two assembled shells (7, 8) and **in that** the aperture (16) opens out onto a first edge (17) of one of the shells (7).

3. Installation according to Claim 1 to 2, **characterized in that** the middle zone (18) of the sealing lip (14) consists of a peripheral joint (19).

4. Installation according to Claim 3, **characterized in that** the peripheral joint (19) consists of at least one end zone (23) arranged as an extension of the middle zone (18).

5. Installation according to any one of the preceding claims, **characterized in that** the end zone (23) is interposed between the two shells (5, 6) assembled to form the casing (4).

6. Installation according to any one of the preceding claims, **characterized in that** the condensate draining device (3) is provided with a baffle (25) suitable for preventing noise nuisance passing through the draining pipe (9).

7. Installation according to Claim 6, **characterized in that** the baffle (25) is integral with the sleeve (10) and overhangs the draining pipe (9).

8. Installation according to Claim 6, **characterized in that** the baffle (25) is integral with the middle zone (18) by means of a second film hinge (27).

9. Installation according to Claim 8, **characterized in that** the baffle (25) is provided with a stop (28) arranged opposite the second film hinge (27).

10. Installation according to any one of the preceding claims, **characterized in that** the thickness of the sleeve (10) is constant.

11. Installation according to any one of the preceding claims, **characterized in that** the sleeve (10) is realized in styrene-ethylene-butylene-styrene or in rubber.
